# EUROPEAN PATENT SPECIFICATION

(11) **EP 0 576 540 B1**
(45) Date of publication and mention of the grant of the patent: **20.09.1995**
(21) Application number: 92907918.4
(22) Date of filing: 27.02.1992
(51) Int. Cl.: C01B 21/072, C01B 21/068, C01B 31/36

(54) **MOVING BED PROCESS FOR CARBOTHERMALLY SYNTHESIZING NONOXIDE CERAMIC POWDERS**
VERFAHREN ZUR KARBOTHERMISCHEN HERSTELLUNG VON NICHTOXIDKERAMIKPULVER IN EINEM WANDERBETT
PROCEDE A LIT FLUIDISE POUR EFFECTUER LA SYNTHESE CARBOTHERMIQUE DE POUDRES DE CERAMIQUE NON OXIDEE

(30) Priority: 22.03.1991 US 673624
(43) Date of publication of application: 05.01.1994
(73) Proprietor: THE DOW CHEMICAL COMPANY, Midland, Michigan 48640 (US)
(72) Inventor: HENLEY, John, P., Midland, MI 48640 (US); DUNN, David, A., Midland, MI 48640 (US); EISMAN, Glenn, A., Midland, MI 48640 (US); ADEGBITE, Valerie, O., Lansing, MI 48910 (US)
(74) Representative: Burford, Anthony Frederick
(86) International application number: PCT/US92/01482
(87) International publication number: WO 92/16457

(56) References cited:
- EP-A- 0 239 301
- EP-A- 0 271 237
- US-A- 3 032 398
- SPRECHSAAL, vol. 117, no. 7, July 1984, Coburg (DE); Ing. F.K. VAN DIJEN et al., pp. 627-629
- CHEMICAL ABSTRACTS, vol. 104, no. 4, January 1986, Columbus, OH (US); p. 109, no. 21416w
- PATENT ABSTRACTS OF JAPAN, vol. 12, no. 70 (C-479), 04 March 1988

## Description

The present invention relates generally to carbothermally reduced ceramic materials such as aluminum nitride or silicon carbide formed from a corresponding oxide in the presence of carbon.

US-A-3,032,398 discloses a process and furnace for the continuous production of aluminum nitride. Pellets composed of aluminum oxide, carbon and a calcium aluminate binder continually pass downward from a preheating zone into an elongate, externally heated reaction zone against a countercurrent flow of gaseous nitrogen. The pellets are heated uniformly to a temperature not in excess of 1750° Centigrade (°C) while in the reaction zone to form aluminum nitride. The aluminum nitride is continuously removed at a point below the reaction zone and recovered. Reaction gases pass upward out of the reaction zone into an expansion zone maintained at a temperature that causes volatile calcium species contained in the reaction gases to condense and be deposited within the expansion chamber. The reaction gases, less the calcium components, exit the top of the expansion zone. The calcium-containing deposits may be removed periodically from the expansion zone without interrupting the flow of pellets through the furnace.

JP-A-61-47435 discloses a method for manufacturing aluminum nitride powder. Pellets consisting of alumina powder and carbon powder in the presence of a binder are fed to a vertical furnace and fired at a temperature of 1400 to 1800°C in a nitrogen-containing atmosphere. The pellets have a compressive strength of 2-40 kilograms (kg) per pellet and are fed from the top of the furnace. After the furnace is packed with pellets, the pellets are fired in the presence of a nitrogen-containing gas to form aluminum nitride. The aluminum nitride is subsequently removed from the furnace. The binders are preferably organic binders and include water-soluble polymers such as polyvinyl alcohol;, hydroxyethyl cellulose; carboxymethylcellulose; molasses; hydrophobic binders such as petroleum resins, and phenolic resins. The starting pellets may be added continuously to fill the furnace provided product pellets are removed continuously from the bottom of the furnace.

The present invention is a process for preparing metal nitride or metal carbide powder from a corresponding metal oxide comprising: adding calcined porous precursor pellets directly to a heated, elongate reaction zone of a vertical, gravity flow, carbothermal reactor at a rate sufficient to partially, but not completely, fill the reaction zone and form a bed of pellets that flows downward through the reaction zone against a countercurrent gaseous flow; the precursor pellets, when added, being at a temperature less than or equal to that used to calcine the precursor, the precursor pellets containing at least one metal oxide, carbon or a source of carbon, and a binder; the reaction zone being maintained at a temperature sufficient to devolatilize said pellets and carbothermally reduce the metal oxide to its corresponding metal nitride or metal carbide; devolatilizing the precursor pellets to ensure that substantially all volatile components exit the reactor without condensing either on internal reactor surfaces or upon other pellets within the bed of pellets; and carbothermally reducing the metal oxide to its corresponding metal nitride or metal carbide.

The foregoing process offers several advantages. The calcined pellets can withstand the thermal shock that occurs when pellets that have not been preheated are added directly to a heated reaction zone. The partially full, heated reaction zone avoids an accumulation of comparatively cool pellets immediately above the reaction zone. The comparatively cool pellets are at a temperature below that of the reaction zone and provide surfaces upon which volatile components exiting the reaction zone can condense. The condensed volatiles can cause pellets to stick together. If enough pellets stick together, they effectively form a bridge that blocks the flow of pellets into the heated reaction zone. In this case, reactor operations must be halted long enough to remove the blockage. The partially full, heated reaction zone also promotes removal of volatiles without requiring a separate collection apparatus that must be cleaned periodically. The partially full, heated reaction zone further leads to use of a simpler reactor as neither preheating nor an apparatus to preheat are needed.

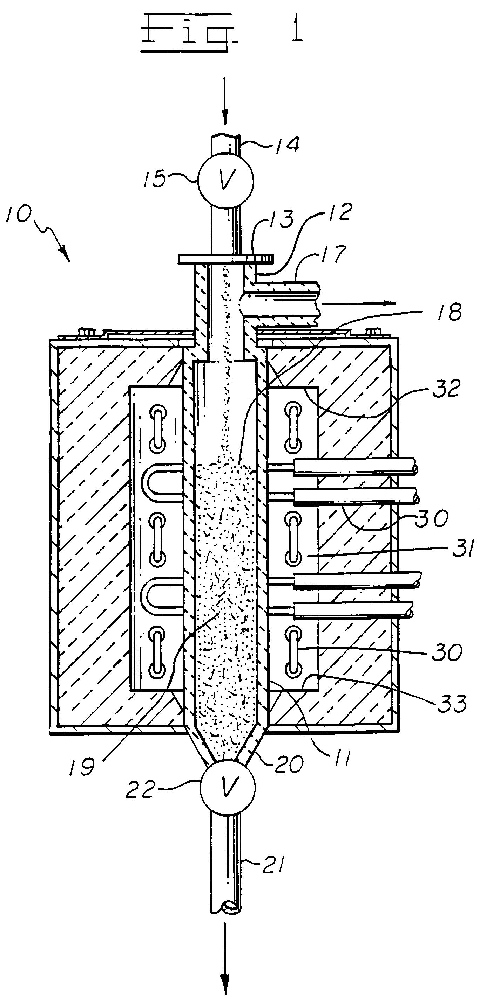

The Figure is a schematic vertical, partial sectional view of a furnace apparatus suitable for use in conjunction with the process of the present invention.

The furnace designated by reference numeral 10 consists of a vertical vessel 11 and a plurality of heating elements 30. The vertical vessel 11 includes an upper end 12 capped by a flange 13 and a lower end 20 operatively connected to a discharge conduit 21. Disposed within discharge conduit 21 is a discharge control valve 22. Proximate to upper end 12 is a gas and volatile material discharge conduit 17. Discharge conduit 17 may be horizontally disposed, or nearly so, and is operatively connected to feed conduit 14. Disposed within feed conduit 14 is a feed control means or valve 15. Feed conduit 14 is operatively connected to a source of precursor pellets (not shown). The heating elements 30 combine to form a heated reaction zone 31 having an upper end 32 and a lower end 33. Reference numeral 18 denotes what may be regarded as an upper surface of a pellet bed 19.

The present invention concerns preparing metal nitride or metal carbide powders from their corresponding metal oxide via carbothermal reduction. The metal oxide is suitably selected from metal oxides having (a) thermodynamic properties such that carbothermal reduction thereof is favored at a temperature within a range of from 1000° to 2400°C and (b) a vapor pressure less than or equal to 0.1 atmosphere at a temperature within said range. The low vapor pressure minimizes material loss through volatilization upon introduction of precursor pellets containing the oxides into the reaction zone. The metal oxide beneficially has a metal moiety selected from aluminum, silicon, titanium, zirconium, hafnium, tantalum, molybdenum, vanadium, or chromium. The metal moiety is beneficially aluminum, silicon or titanium. The metal moiety is desirably aluminum or silicon. As used herein, the term "corresponding metal oxide" means that the metal moiety carries over to the metal carbide or metal nitride. By way of illustration silicon dioxide is the corresponding metal oxide for silicon nitride and silicon carbide.

The metal oxides used in the present invention suitably have a primary particle size within a range of from 0.05 to 20 micrometers (µm). The range is beneficially from 0.2 to 2 µm. The metal oxides suitably have a purity greater than about 99.8 percent. The purity is desirably greater than 99.97 percent. Purities of 99.99 percent or greater produce satisfactory products, but at a greater cost. The foregoing purities are believed to be suitable for electronic grade uses. Metal oxide purities as low as 98 percent or even 96 percent may produce acceptable metal nitride or metal carbide materials for other end use applications.

The process of the present invention begins when calcined, porous precursor pellets are added directly to a heated, elongate reaction zone of a vertical reactor. The pellets contain at least one metal oxide, carbon or at least one material capable of supplying carbon, and at least one binder composition.

Precursor pellets are suitably prepared by a four step process. In step one, pellet constituents, such as metal oxide powder, are mixed with sufficient water to form an extrudable composition. A low shear mixing device, such as a ribbon blender, homogenizes pellet constituents and the water without substantial metals contamination levels. In step two, the extrudable composition is processed through an extruder to form extrudates of a desired shape and size. One size and shape combination is a 0.25 inch (0.62 centimeter (cm)) pellet. A single screw, single stage, four inch (10.2 cm) extruder equipped with a die plate having a number of holes of a desired dimension provides satisfactory results, particularly when used in conjunction with a die face cutter. The extrudates are dried in step three to a target moisture content of less than about two weight percent (wt%), based upon pellet weight. The target moisture content is beneficially less than one wt%. Care must be exercised to avoid drying at such a rapid rate that a crust forms on pellet surfaces. A crust interferes with the removal of moisture from inner portions of the pellets. Drying typically occurs in an apparatus such as a forced air oven at a temperature of no more than 150°C for a period of time sufficient to achieve the target moisture content without forming crust layers. A drying time of about 15 hours yields satisfactory results at a temperature of 150°C. The drying time is desirably as short as two hours. Longer drying times are needed for lower drying temperatures. In step four, the dried pellets are "calcined". As used herein, the term "calcined" means that the dried pellets are heated at a temperature sufficient to decompose components of the binder composition into a carbonaceous residue and maintained at that temperature until evolution of residual gases effectively ceases. Calcination temperatures are typically within a range of from 250°C to 400°C. The calcination temperatures are preferably from 300°C to 350°C. The drying and calcination steps are preferably combined in a continuous process. A particularly effective combination includes: heating to a temperature of 150°C for two hours; increasing to a temperature of about 330°C over a period of one hour; maintaining that temperature for a period of six or seven hours; and then cooling to ambient temperature over a period of, for example, five to eight hours.

The pellets must have sufficient strength to withstand a rapid change in temperature, also known as "thermal shock", when they are added to the heated reaction zone without being preheated. In order to achieve this level of strength, the calcination step cannot be eliminated. Without calcination, dried pellets tend to disintegrate into very fine powder or dust. Broken pellets can cause bridging problems due to a broad size distribution of solid components. The solid components include pellets, broken pellets of various sizes and powder. If the powder and pellet fragments are sufficiently small, they may become fluidized within the bed, thereby causing problems in maintaining an accurate bed level and a continuous flow of solid reactants through the heated reaction zone. The conversion to dust also translates to a raw material loss as the dust is caught up in the countercurrent gaseous flow and swept out of the reactor. The carbonaceous residue from decomposed binder materials, especially starches, is believed to provide the pellets with sufficient strength to generally maintain their structural integrity when exposed to the aforementioned thermal shock.

Pellet crush strength (American Society for Testing and Materials (ASTM) Test Method D 4179-82) is believed to be an indicator of resistance to thermal shock. The calcined pellets beneficially have a crush strength within a range of from 10 to 20 pounds-force (lb_{f}) (from 44 to 89 Newtons (N)). Calcined pellets having a crush strength of less than 10 lb_{f} (44N) are susceptible to fragmentation upon exposure to thermal shock in the heated reaction zone. Calcined pellets may have a strength in excess of from 20 lb_{f} (89) up to 100 lb_{f} (445N). The use of crush strengths in excess of 20 lb_{f} (89N), particularly those approaching 100 lb_{f} (445N), may be economically impractical for two reasons. First, time and energy must be expended to crush and grind metal nitride or metal carbide product pellets. Second, crushing and grinding, particularly of very crush-resistant materials, inevitably introduces contaminants, such as metal from milling or grinding media.

The pellets must also have sufficient porosity to facilitate penetration of gases and allow volatile materials to escape from the pellets as they are heated. In the case of nitrides, the porosity must also be sufficient to facilitate penetration of gaseous nitrogen to effect nitridation. A suitable porosity ranges from 0.03 to 0.67 cubic centimeters per gram of precursor pellet material. This equates to a void volume of from 10% up to 70%. Porosity may be determined in accordance with ASTM Test Method D-4641-87.

The carbon is suitably a material selected from acetylene black, plant carbon, thermal black, coke, carbon black and graphite. The material is beneficially carbon black or graphite.

The carbon and metal oxide starting materials need not be substantially pure (greater than 99.0 wt% purity). The process of the present invention removes at least a portion of contaminants, such as iron and alkali metals, that volatilize at reaction zone temperatures. In other words, at least some purification of the precursor pellets occurs after they are added to the heated reaction zone. By way of illustration, carbothermally reduced materials resulting from the present invention contain from 40 to 80% less silicon and from 60 to 90% less iron than the corresponding precursor pellets. As such, one benefit of the present invention is an ability to use lower purity starting materials. For example, aluminum oxide having a purity of 99.9% can be used in place of aluminum oxide having a purity of 99.99%.

The binder composition is beneficially a blend of wheat and corn starches. The wheat starch is suitably in a pregelatinized, cool water soluble form such as that supplied by Ogilvie Mills under the trade designation GEN VIS 700™. Pregelatinization of starch is a process whereby the starch is cooked to its maximum swelling state and then dried on drum dryers to remove the water. The pregelatinization process opens starch granules and allows rapid regelatinization to occur. The corn starch is suitably unmodified, powdered corn starch that is cool water insoluble and hot water dispersible. As used herein, "cool" refers to ambient temperatures (about 25°C) and "hot" refers to temperatures as high as 80°C, typically from 58 to 72°C. The "hot" temperature varies with each starch and is from 62 to 72°C for corn starch and from 58 to 64°C for wheat starch.

The terms "starch" and "modified starch", as used herein, are defined in Condensed Chemical Dictionary, Eleventh Edition, Van Nostrand Reinhold Company, Inc.(1987), at pages 1089-90. Starch (CAS: 9005-84-9) a carbohydrate polymer having the following repeating unit: 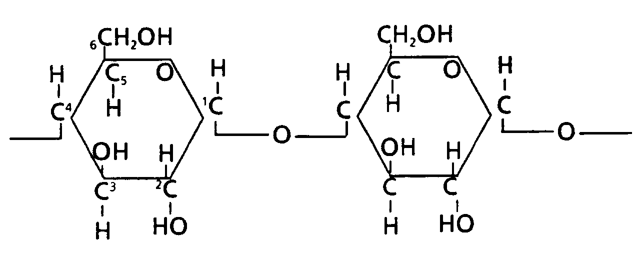
It is composed of about 25% amylose (anhydroglucopyranose units joined by glucosidic bonds) and 75% amylopectin, a branched-chain structure. Irreversible gel formation occurs in hot water; and swelling of granules can be induced at room temperature with such compounds as formamide, formic acid, and strong bases and metallic salts.

A modified starch is any of several water-soluble polymers derived from a starch (corn, potato, tapioca) by acetylation, chlorination, acid hydrolysis, orenzymatic action. These reactions yield starch acetates, esters, and ethers in the form of stable and fluid solutions and films.

The starches are beneficially used in a combined amount of from 5 to 15 wt%, based upon weight of non-starch solids contained in the precursor pellets prior to calcination. The combined amount is desirably from 8 to 12 wt%. The combined amount is preferably about 10 wt%. Suitable amounts for wheat and corn starches both fall within a range of from 3 to 12 wt%, based upon weight of non-starch solids contained in the precursor pellets prior to calcination. A preferred combination is 3 wt% corn starch and 7 wt% wheat starch.

Other known binding materials may be used in conjunction with, or in place of, the blend of wheat and corn starches provided two conditions are met. First, the materials must decompose to a carbonaceous residue that functions in a manner similar to the residue from the blend of starches. Second, the residue from such binding materials must not adversely affect physical properties of the resultant carbide or nitride material.

The precursor pellets are added directly to the heated reaction zone at a rate sufficient to partially, but not completely, fill the reaction zone. The pellets constitute a moving bed 19 having an upper surface 18 that is continuously renewed as more precursor pellets are added to the reaction zone. The upper surface must not, however, extend above the heated or reaction zone. If this occurs, pellets outside and above the heated zone will be at a temperature lower than that of pellets within the heated zone. If the temperature of pellets outside the zone is below the temperature at which volatile materials condense, the bed will become plugged by condensed materials. Plugging usually causes reactor operations to stop for a period of time sufficient to clean reactor surfaces and remove materials forming the plug. The reaction zone must, however, be full enough to allow the carbothermal reaction to proceed substantially to completion before the pellets flow out of the reaction zone.

The rate of pellet addition is sufficient to achieve and maintain the upper surface of the moving bed at a level that is within a range from 65 to 95% of the hot zone for a 1.4 meter hot zone having a diameter of 11.4 centimeters. "Percent of the hot zone", as used herein, is measured from the lower end of the heated reaction zone. The range is desirably from 70 to 90% of the hot zone and preferably from 80 to 85% of the hot zone. Particularly satisfactory results are obtained with a bed level of 82% of the hot zone. The actual rate at which pellets are added to the heated reaction zone and the bed level within the heated reaction zone vary with the height, diameter, configuration and volume of the heated reaction zone. A level of less than 65% of the hot zone may produce an acceptable product if residence time within the heated reaction zone is sufficient. Such a level does not, however, efficiently use reactor space. By way of illustration, a feed rate of 1.4 kg/hour is sufficient to maintain the bed level at 82% of the hot zone in the 1.4m X 11.4cm heated reaction zone. A greater feed rate of, for example, 2.7 kg/hr may be used to bring the bed level up to the desired level. Product pellets are removed at a rate sufficient to maintain the bed level. A product removal rate of 0.5-0.8 kg/hr helps maintain the 82% level in the 1.4m X 11.4cm heated reaction zone. Appropriate bed levels, rates of addition and rates of product removal for a given heated reaction zone are readily determined by one skilled in the art. For example, as the size of the heated reaction zone increases, the rates of pellet addition and product removal should also increase. The bed level may increase or decrease depending upon how much residence time is needed in the heated reaction zone to attain a desired level of conversion of starting materials to product.

The foregoing rates of addition also allow the precursor pellets to be devolatilized after entry into the heated reaction zone. The combined effects of reaction zone temperature and pellet addition rate allow volatile components of the pellets to exit the reactor without condensing on internal reactor surfaces or upon other pellets within the bed of pellets. This minimizes, if not eliminates, reactor plugging.

The countercurrent gaseous flow varies depending upon whether the desired product is a metal nitride or a metal carbide. The gaseous flow comprises nitrogen or a material capable of releasing nitrogen if the desired product is a metal nitride. A neutral gaseous atmosphere, such as that provided by argon or another noble gas, facilitates formation of metal carbides. The gas flow must be at a rate that is sufficiently high to promote the carbothermal reduction action yet sufficiently low to avoid fluidization of the pellet bed. One method of specifying suitable gas flow rates is as a percentage of minimum fluidization velocity, U_{mf}. The U_{mf} for 1/4 inch (0.64 cm) pellets is calculated to be 6.4 feet/second (1.95 meters/second) +/- 25% error. U_{mf} is a derivation of Ergun's equation for pressure drop through a column. D. Kunii and O. Levenspiel discuss the derivation in Fluidization Engineering, pages 66-67 and 72-73 (1969). S. Ergun explains the equation in "Fluid Flow Through Packed Columns", Chemical Engineering Progress, volume 48, pages 89-94 (1952). Beneficial results are obtained with gas flow rates range of from 40 to 90% of U_{mf}. The gas flow rates are desirably from 60 to 80% of U_{mf}. As flow rates approach U_{mf}, the bed of pellets has an increasing tendency to hang up and separate rather than move freely through the reactor. As flow rates approximate U_{mf}, the pellets in the bed begin to channel. This results in unreacted pellets passing through the reactor.

Nitrogen-containing gases include substantially pure nitrogen gas, gases containing nitrogen, and materials such as ammonia that are readily converted to nitrogen gas at reaction zone temperatures. The nitrogen-containing gases are introduced continuously from the bottom of a vertical reactor to provide a countercurrent flow against the downward movement of pellets. The nitrogen-containing gas is supplied at a rate sufficient to provide enough nitrogen to yield substantially complete reductive nitridation of the precursor pellets before they exit the reaction zone. Suitable results are obtained when the nitrogen-containing gas is supplied at a rate of from 2 to 20 times an amount determined by stoichiometry to satisfy the carbothermal reduction reaction (hereinafter referred to as the "stoichiometric amount"). The nitrogen-containing gas is beneficially supplied at from 4 to 16 times the stoichiometric amount. The nitrogen-containing gas is desirably supplied at about 6 times the stoichiometric amount.

Exhaust gases from the heated reaction zone contain an amount of carbon monoxide. A partial pressure of carbon monoxide in the exhaust gases of less than 10% indicates that the reaction is not operating at optimum efficiency. A carbon monoxide partial pressure in excess of 60% indicates that the resultant product will have an undesirably high level of residual or bound carbon. A desirable carbon monoxide exhaust gas partial pressure is from 10 to 25%.

The reaction zone is beneficially maintained at a temperature within a temperature range suitable for each material being produced. The range for aluminum nitride is suitably from 1500°C to 1800°C, desirably from 1600°C to 1750°C. The range for silicon carbide is suitably from 1400°C to 2200°C, desirably from 1600°C to 1900°C. The range for silicon nitride is suitably from 1200°C to 1600°C, desirably from 1300°C to 1500°C.

The carbothermally reduced pellets are removed from the reactor by standard means, such as a lockhopper or other solids removal apparatus. Crude product contained in these pellets is recovered by conventional technology. By way of illustration only, free carbon contained in an aluminum nitride product may be burned out or oxidized, in a rotary kiln operating at 750 to 800°C in the presence of a flowing stream of air and nitrogen. The burned out pellets are then crushed, by a conventional apparatus such as two-roll crusher, and, if necessary, milled, as in a jet mill, to obtain a suitable product particle size. Silicon carbide recovery includes an additional leaching step after the burnout step to remove unreacted or post reactor oxidized silica.

The following examples illustrate the present invention and are not to be construed as limiting the scope of the invention. All parts and percentages are by weight unless otherwise specified.

### Example 1

Seventy Pounds (lbs)(31.8 kgs) of alumina and 25 lbs (11.3 kgs) of carbon were milled for 4 hours at a rate of 30.5 revolutions Per minute in a 79 gallon (gal.)(300 liter (L)) ball mill half filled with 0.5 inch (1.3 cm) spherical milling media (99.5% alumina). The alumina, commercially available from Aluminum company of America under the trade designation Al6-SG, had a surface area of 9.46 square meters per gram (m²/g). The alumina had impurity levels, in parts per million (ppm), as follows: calcium - 66; silicon - 53; chromium - less than 10; and iron - 80. The carbon, commercially available from Chevron Chemical Company under the trade designation Shawinigan™ acetylene black, had a surface area of 67 m²/g. The carbon had impurity levels, in ppm, as follows: calcium - 15; silicon - 120; chromium - 3; and iron - 18.

One hundred eighty lbs (81.6 kgs) of milled material were transferred to a 13 cubic foot (0.37 m³) ribbon blender and dry blended for about 15 minutes with 18 lbs (8.2 kgs) of wheat derived soluble starch. Thirteen gal (49 L) of water were added to the dry blended mixture at a rate of about 3 gal (11.4 L) per minute while continuing blending. Blending continued for an additional twenty minutes and resulted in a workable or pliable mass of wet blended material.

The wet blended material was fed to a Bonnot, 4 inch (10.2 cm), single screw, forming extruder with a packing auger. The extruder, equipped with a die plate containing 132 holes, each having a diameter of 3/16 inch (0.5 cm), and a motor driven die face cutter, produced extrudates in the form of right cylinders having a length of 3/16 inch (0.5 cm). The cylinders were tumbled in a 30 gal (114 L) drum for about 8 hours to round them to pellets having a spherical shape. About 1 lb (0.45 kg) of the milled alumina/carbon mixture was added to the drum prior to starting the tumbling procedure to minimize a tendency of wet cylinders to stick together.

The spherical pellets were loaded in trays to a depth of 2 in. (5.1 cm). The trays were loaded into a nitrogen purged oven to calcine the pellets. The oven temperature was increased to 150°C at a rate of 150°C per hour, held at that temperature for 15 hours, then increased to 330°C at a rate of 90°C per hour and held at that temperature for 2 hours before being decreased to a temperature of 60°C over a period of 6 hours. The calcined pellets were removed from the oven and screened to remove fines using a 24 inch (61 cm) gyratory screen shaker equipped with a U.S. Standard 18 mesh screen (0.001 m opening).

The screened pellets were loaded into a feed hopper of a vertical, tubular reactor. The reactor included a 4.5 inch (11.4 cm) inside diameter graphite tube with a 4.5 ft (1.4 m) long hot zone. The tube was heated by passing a controlled high current through the tube. Water cooled electrical connections were made at the top and bottom of the tube. The top of the tube was equipped with gas outlet piping and a feed pipe from a variable speed, three inch (7.6 cm) rotary feed valve. The feed valve was, in turn, supplied with pellets from the feed hopper. The bottom of the tube was equipped with a variable speed, three inch (7.6 cm) rotary valve to control material levels within the tube. Connections to supply gaseous nitrogen that flowed upward through a bed of pellets contained in the tube and out the top of the tube via the outlet piping were located above the rotary valve. A lockhopper arrangement to aid in removing product from the reactor was located below this valve.

Reactor bed level was determined by a series of 5 pyrometers that were evenly spaced along the hot zone. A video camera mounted at the top of the reactor provided visual images that could be correlated to bed depth.

After filling the reactor with a sufficient amount of previously reacted pellets to establish a bed level of 20% of the hot zone, the reactor was preheated to a temperature of 1200°C. Gaseous nitrogen was supplied to the reactor at a rate of one standard cubic foot per minute (scfm) (28.3 standard liters per minute (slm) or 470 cm³ per second) during preheating. Once this temperature was reached, calcined pellets were added at a rate of 6 lbs (2.7 kg) per hour and product pellets were removed at a rate of 1.8 lbs (0.8 kg) per hour. The rates of addition and removal continued until the bed level or top of the bed reached about 82% of the hot zone at which time the feed rate was reduced to about 3 lbs (1.4 kg) per hour to maintain a bed level at or near 82%. Concurrent with increasing the bed level, the temperature was increased to 1700°C over a period of 2.5 hours. In addition, the rate of supply of gaseous nitrogen was increased to 1.7 scfm (48.1 slm) at the same time as feeding calcined pellets to the reactor commenced.

The product from the reactor was a light gray pellet of approximately the same size as the calcined pellets. Analysis of the product via x-ray diffraction revealed that it was primarily aluminum nitride. Analysis of the product for carbon using a LECO model IR-412 with a Model HF-400 furnace revealed a carbon content of about 3%. Analysis of the product for oxygen using a LECO model TC-436 with a Model EF-400 furnace revealed an oxygen content of about 0.2%. This product was further processed in a rotary burnout furnace at 750° Centigrade with a 50/50 volumetric mixture of air and nitrogen for a period of 120 minutes to remove excess carbon. The product, after further processing, was primarily aluminum nitride with a surface area of 2.41 m²/g and the following impurities: oxygen - 0.70%; carbon - 0.05%; calcium - 21 parts per million (ppm); silicon - 66 ppm; chromium - 9 ppm; and iron - 13 ppm.

### Example 2

Calcined pellets were prepared as in Example 1 save for using a mixture of 4% wheat derived soluble starch and 6% corn derived insoluble starch rather than 10% wheat derived soluble starch. The calcined pellets had a crush strength of between 6 and 9 lb_{f} (between 26.7N and 40.0N). The calcined pellets were reacted as in Example 1 with some process modifications. The modifications were: a gaseous nitrogen flow rate of 2.7 scfm (76.5 slm) rather than 1.7 scfm (48.1 slm); a product removal rate of from 1.2 to 1.8 lbs (0.5 to 0.8 kg) per hour rather than 1.8 lbs (0.8 kg) per hour; and a calcined pellet feed rate of 2.0 to 3.0 lbs (0.9 to 1.4 kg) per hour rather than 3.0 lbs (1.4 kg) per hour.

The product, after processing to remove excess carbon as in Example 1, was predominantly aluminum nitride with a surface area of 2.83 m²/g and the following impurities: oxygen - 1.17%; carbon - 0.08%; calcium - 123 ppm; silicon - 83 ppm; chromium - less than 10 ppm; and iron - 21 ppm.

### Comparative Example A

The process of Example 1 was duplicated save for continuing to add calcined pellets until the top of the bed was about 6 inches (15.2 cm) above the top of the hot zone. This corresponded to a bed level of about 110%. The temperature of those pellets above the hot zone was less than 1000°C. Once this state was achieved, the bed level continued to rise even though removal of product from the reactor continued. This indicated the presence of bridging or plugging of the bed at some point in the reactor.

After shutting down the reactor, one could see that pellets of calcined material at or near the top of the bed were bonded together.

### Comparative Example B

The procedure of Example 2 was duplicated save for certain changes. The changes included a reactor temperature of 1600°C, a product removal rate of 2.0 lbs (0.9 kg) per hour, and a nitrogen flow rate of 1.8 to 2.75 scfm (51 to 78 slm). The product, prior to carbon burnout, had an oxygen content between 0.5 and 0.9%.

After attaining a steady state based upon the foregoing parameters, the calcined pellets were replaced by pellets prepared in the same manner save for calcination at temperatures in excess of 150°C. In other words, the pellets were dried at 150°C, but not calcined. Images taken by the video camera showed a dust cloud above the top of the reactor.

After a couple of hours of operation, images on a video monitor showed that the top of the bed appeared to be bubbling in a manner like that observed in a fluidized bed. The product had an oxygen content which ranged from 5 to 20%. The increased oxygen content indicated that the bed contained fine particles rather than pellets and that the particles were being fluidized. It also indicated that a substantial percentage of the feed material passed through the reactor with only a short exposure to reaction conditions.

### Example 3

The procedure of Example 2 was duplicated save for using a mixture of 2% soluble wheat derived starch and 8% corn derived insoluble starch rather than a mixture of 4% soluble wheat derived starch and 8% corn derived insoluble starch. The calcined pellets had a crush strength of 2 to 4 lb_{f} (8.9 to 17.8N).

A significant amount of dust could be seen on the video monitor. This indicated that some feed pellet degradation was taking place. Analysis of product size showed a broad distribution rather than the pellets having nearly the same size as the calcined pellets as in Example 2. The oxygen content of the product varied between 0.5 and 0.9 %.

Similar results were obtained with a mixture of 3% soluble wheat derived starch and 7% corn derived insoluble starch.

Examples 1-3 and Comparative Examples A and B demonstrate two points. First, the process of the present invention yields a product with fixed or bound carbon and oxygen contents of less than one percent. Second, wheat starch or a mixture of wheat and corn starches with sufficient wheat starch may be used as a binder material provided the binder material is calcined.

## Claims

1. A process for preparing a metal nitride or metal carbide powder from a corresponding metal oxide comprising:
adding calcined porous precursor pellets directly to a heated, elongate reaction zone of a vertical, gravity flow, carbothermal reactor at a rate sufficient to partially, but not completely, fill the reaction zone and form a bed of pellets that flows downward through the reaction zone against a countercurrent gaseous flow; the precursor pellets, when added, being at a temperature less than or equal to that used to calcine the precursor, the precursor pellets containing at least one metal oxide, carbon or a source of carbon, and a binder; the reaction zone being maintained at a temperature sufficient to devolatilize said pellets and carbothermally reduce the metal oxide to its corresponding metal nitride or metal carbide;
devolatilizing the precursor pellets to ensure that substantially all volatile components exit the reactor without condensing either on internal reactor surfaces or upon other pellets within the bed of pellets; and
carbothermally reducing the metal oxide to its corresponding metal nitride or metal carbide.

2. A process as claimed in Claim 1 wherein the metal oxide is alumina, the gaseous flow comprises nitrogen and the corresponding metal nitride is aluminum nitride.

3. A process as claimed in Claim 2 wherein the reaction zone temperature is maintained within a range of from 1500°C to 1800°C.

4. A process as claimed in Claim 1 wherein the metal oxide is silica, the gaseous flow comprises argon and the corresponding metal carbide is silicon carbide.

5. A process as claimed in Claim 4 wherein the reaction zone temperature is maintained within a range of from 1400°C to 2200°C.

6. A process as claimed in Claim 1 wherein the metal oxide is silica, the gaseous flow comprises nitrogen and the corresponding metal nitride is silicon nitride.

7. A process as claimed in Claim 6 wherein the reaction zone temperature is maintained within a range of from 1200°C to 1600°C.

8. A process as claimed in any of the preceding Claims wherein the precursor pellets have an amount of binder sufficient to allow the pellets to retain structural integrity when exposed to thermal shock upon being added to the heated reaction zone.

9. A process as claimed in any of the preceding Claims wherein the binder is a blend of wheat and corn starches, the blend being present in an amount of from one to twenty percent by weight, based upon precursor weight.

10. A process as claimed in Claim 6 wherein the wheat and corn starches are present in a weight ratio of wheat starch to corn starch within a range of from 1:10 to 10:1.

11. A process as claimed in any one of the preceding Claims wherein calcined precursor pellets are added at a rate sufficient to maintain an upper surface of the bed of pellets at a level within a range of from 65 to 95% of the hot zone for a hot zone having a length of 1.4 meters and a diameter of 11.4 centimeters.

12. A process as claimed in any one of the preceding Claims wherein the calcined precursor pellets have a crush strength within a range of from 44 to 89 Newtons (10 to 20 pounds-force).

13. A process as claimed in any one of the preceding Claims wherein the calcined precursor pellets were calcined at 300°C to 350°C.

14. A process as claimed in any one of the preceding Claims wherein the calcined precursor pellets have a porosity of 0.03 to 0.67 cm³/g.

15. A process as claimed in any one of the preceding Claims wherein the calcined precursor particles have a particle size of 0.2 to 2 micrometers.

16. A process as claimed in any one of the preceding Claims wherein the gas flow is 60 to 80% of the minimum fluidization velocity.

## Patentansprüche

1. Verfahren zum Herstellen eines Metallnitrid- oder Metallcarbidpulvers aus einem entsprechenden Metalloxid, umfassend:
direktes Zugeben von calcinierten porösen Vorläuferpellets zu einer erwärmten langgestreckten Reaktionszone eines vertikalen carbothermischen Schwerkraftreaktors in einer ausreichenden Rate, um die Reaktionszone teilweise aber nicht vollständig zu füllen und ein Pelletbett zu bilden, das sich durch die Reaktionszone gegen einen gasförmigen Gegenstrom abwärts bewegt, wobei die Vorläuferpellets bei der Zugabe eine Temperatur aufweisen, die geringer oder gleich ist wie die die verwendet wurde, um den Vorläufer zu calcinieren, wobei die Vorläuferpellets mindestens ein Metalloxid, Kohlenstoff oder eine Kohlenstoffquelle und ein Bindemittel enthalten, wobei die Reaktionszone bei einer ausreichenden Temperatur gehalten wird, um die Pellets von flüchtigen Bestandteilen zu befreien und das Metalloxid carbothermisch zu seinem entsprechenden Metallnitrid oder Metallcarbid zu reduzieren;
Befreien der Vorläuferpellets von flüchtigen Bestandteilen, um sicherzustellen, daß im wesentlichen alle flüchtigen Komponenten den Reaktor verlassen ohne entweder auf inneren Reaktoroberflächen oder auf anderen Pellets innerhalb des Pelletbetts zu kondensieren und
carbothermisches Reduzieren des Metalloxids zu seinem entsprechenden Metallnitrid oder Metallcarbid.

2. Verfahren nach Anspruch 1, wobei das Metalloxid Aluminiumoxid ist, der Gasstrom Stickstoff umfaßt und das entsprechende Metallnitrid Aluminiumnitrid ist.

3. Verfahren nach Anspruch 2, wobei die Temperatur der Reaktionszone innerhalb eines Bereichs von 1500°C bis 1800°C gehalten wird.

4. Verfahren nach Anspruch 1, wobei das Metalloxid Siliciumoxid ist, der Gasstrom Argon umfaßt und das entsprechende Metallcarbid Siliciumcarbid ist.

5. Verfahren nach Anspruch 4, wobei die Temperatur der Reaktionszone innerhalb eines Bereichs von 1400°C bis 2200°C gehalten wird.

6. Verfahren nach Anspruch 1, wobei das Metalloxid Siliciumioxid ist, der Gasstrom Stickstoff umfaßt und das entsprechende Metallnitrid Siliciumnitrid ist.

7. Verfahren nach Anspruch 6, wobei die Temperatur der Reaktionszone innerhalb eines Bereichs von 1200°C bis 1600°C gehalten wird.

8. Verfahren nach einem der vorhergehenden Ansprüche, wobei die Vorläuferpellets eine ausreichende Menge an Bindemittel aufweisen, um zuzulassen, daß die Pellets strukturelle Integrität bewahren, wenn sie bei Einbringen in die erwärmte Reaktionszone einem Wärmeschock ausgesetzt werden.

9. Verfahren nach einem der vorhergehenden Ansprüche, wobei das Bindemittel eine Mischung von Weizen- und Maisstärken ist, wobei die Mischung in einer Menge von 1 bis 20 Gew.-%, bezogen auf das Gewicht des Vorläufers vorhanden ist.

10. Verfahren nach Anspruch 6, wobei die Weizen- und Maisstärken in einem Gewichtsverhältnis von Weizenstärke zu Maisstärke innerhalb eines Bereichs von 1:10 bis 10:1 vorhanden sind.

11. Verfahren nach einem der vorhergehenden Ansprüche, wobei calcinierte Vorläuferpellets in einer ausreichenden Rate zugegeben werden, um eine obere Oberfläche des Pelletbetts auf einem Stand innerhalb eines Bereichs von 65 bis 95 % der heißen Zone für eine heiße Zone mit einer Länge von 1,4 Metern und einem Durchmesser von 11,4 Zentimetern zu halten.

12. Verfahren nach einem der vorhergehenden Ansprüche, wobei die calcinierten Vorläuferpellets eine Druckfestigkeit innerhalb eines Bereichs von 44 bis 89 Newton (10 bis 20 Pounds-force) aufweisen.

13. Verfahren nach einem der vorhergehenden Ansprüche, wobei die calcinierten Vorläuferpellets bei 300°C bis 350°C calciniert wurden.

14. Verfahren nach einem der vorhergehenden Ansprüche, wobei die calcinierten Vorläuferpellets eine Porosität von 0,03 bis 0,67 cm³/g aufweisen.

15. Verfahren nach einem der vorhergehenden Ansprüche, wobei die calcinierten Vorläuferteilchen eine Teilchengröße von 0,2 bis 2 Mikrometer aufweisen.

16. Verfahren nach einem der vorhergehenden Ansprüche, wobei der Gasstrom von 60 bis 80 % der minimalen Fluidisierungsgeschwindigkeit beträgt.

## Revendications

1. Procédé pour préparer une poudre de nitrure métallique ou de carbure métallique à partir d'un oxyde métallique correspondant consistant:
à introduire des granulés de précurseur poreux calcinés directement dans une zone réactionnelle chauffée, allongée d'un réacteur carbothermique, vertical, à écoulement par gravité, à un débit suffisant pour remplir partiellement, mais pas complètement la zone réactionnelle et former un lit de granulés qui s'écoule vers le bas à travers la zone réactionnelle contre un courant gazeux à contre-courant; les granulés précurseurs, lorsqu'ils sont introduits, étant à une température inférieure ou égale à celle utilisée pour calciner le précurseur, les granulés de précurseur contenant au moins un oxyde métallique, du carbone ou une source de carbone, et un liant; la zone réactionnelle étant maintenue à une température suffisante pour dévolatiliser lesdits granulés et réduire carbothermiquement l'oxyde métallique en son nitrure ou carbure métallique correspondant;
à dévolatiliser les granulés précurseurs afin de garantir que pratiquement tous les composants volatils sortent du réacteur sans se condenser soit sur les surfaces internes du réacteur soit sur d'autres granulés à l'intérieur du lit de granulés; et
à réduire carbothermiquement l'oxyde métallique en son nitrure métallique ou carbure métallique correspondant.

2. Procédé selon la revendication 1, dans lequel l'oxyde métallique est l'alumine,' le courant gazeux comprend de l'azote et le nitrure métallique correspondant est le nitrure d'aluminium.

3. Procédé selon la revendication 2, dans lequel la température de la zone réactionnelle est maintenue entre 1 500°C et 1 800°C.

4. Procédé selon la revendication 1, dans lequel l'oxyde métallique est la silice, le courant gazeux comprend de l'argon et le carbure métallique correspondant est le carbure de silicium.

5. Procédé selon la revendication 4, dans lequel la zone de température réactionnelle est maintenue entre 1 400°C et 2 200°C.

6. Procédé selon la revendication 1, dans lequel l'oxyde métallique est la silice, le courant gazeux comprend de l'azote et le nitrure métallique correspondant est le nitrure de silicium.

7. Procédé selon la revendication 6, dans lequel la température de la zone réactionnelle est maintenue entre 1 200°C et 1 600°C.

8. Procédé selon l'une quelconque des revendications précédentes, dans lequel les granulés précurseurs ont une quantité de liant suffisante pour permettre aux granulés de conserver leur intégrité structurelle lorsqu'on les expose à un choc thermique quand ils sont introduits dans la zone réactionnelle chauffée.

9. Procédé selon l'une quelconque des revendications précédentes dans lequel le liant est un mélange d'amidons de blé et de maïs, le mélange étant présent en une quantité d'un à vingt pour-cent en poids, par rapport au poids du précurseur.

10. Procédé selon la revendication 6, dans lequel les amidons de blé et de maïs sont présents en un rapport pondéral d'amidon de blé à l'amidon de maïs compris entre 1:10 et 10:1.

11. Procédé selon l'une quelconque des revendications précédentes, dans lequel les granulés précurseurs calcinés sont introduits à un débit suffisant pour maintenir une surface supérieure du lit de granulés à un niveau suffisant compris entre 65 et 95% de la zone chaude pour une zone chaude ayant une longueur de 1,4 mètre et un diamètre de 11,4 centimètres.

12. Procédé selon l'une quelconque des revendications précédentes, dans lequel les granulés précurseurs calcinés ont une résistance à l'écrasement comprise entre 44 et 89 newtons (10 à 20 livres-force).

13. Procédé selon l'une quelconque des revendications précédentes, dans lequel les granulés précurseurs calcinés ont été calcinés à une température de 300°C à 350°C.

14. Procédé selon l'une quelconque des revendications précédentes, dans lequel les granulés précurseurs ont une porosité de 0,03 à 0,67 cm³/g.

15. Procédé selon l'une quelconque des revendications précédentes, dans lequel les particules de précurseur calcinées ont une granulométrie de 0,2 à 2 micromètres.

16. Procédé selon l'une quelconque des revendications précédentes, dans lequel le courant gazeux a une vitesse de 60 à 80% de la vitesse de fluidisation minimale.
